# EUROPÄISCHE PATENTSCHRIFT

(11) **EP 2 382 618 B1**
(45) Veröffentlichungstag und Bekanntmachung des Hinweises auf die Patenterteilung: **09.01.2013**
(21) Anmeldenummer: 09796644.4
(22) Anmeldetag: 17.11.2009
(51) Int. Cl.: G10K 9/22

(54) **ULTRASCHALLWANDLER ZUM EINSATZ IN EINEM FLUIDEN MEDIUM**
ULTRASONIC TRANSDUCER FOR USE IN A FLUID MEDIUM
TRANSDUCTEUR D'ULTRASONS DESTINÉ À ÊTRE EMPLOYÉ DANS UN FLUIDE

(30) Priorität: 23.12.2008 DE 102008055126
(43) Veröffentlichungstag der Anmeldung: 02.11.2011
(73) Patentinhaber: Robert Bosch GmbH, 70442 Stuttgart (DE)
(72) Erfinder: MUELLER, Roland, 71711 Steinheim (DE); HUEFTLE, Gerhard, 71546 Aspach (DE); HORSTBRINK, Michael, 70469 Stuttgart-Feuerbach (DE); LANG, Tobias, 70193 Stuttgart (DE); RADWAN, Sami, 70437 Stuttgart (DE); KUENZL, Bernd, 71701 Schwieberdingen (DE); WANJA, Roland, 71706 Markgroeningen (DE)
(86) Internationale Anmeldenummer: PCT/EP2009/065290
(87) Internationale Veröffentlichungsnummer: WO 2010/072470

(56) Entgegenhaltungen:
- EP-A1- 0 005 857
- WO-A2-2005/031274
- CA-A1- 2 331 536
- DE-A1-102008 027 974
- DE-C1- 19 809 207
- DE-U1- 9 217 071
- US-A- 4 326 274
- US-A- 5 121 628
- US-A1- 2005 000 279

## Beschreibung

### Stand der Technik

Die Erfindung geht aus von bekannten Ultraschallwandlern, welche beispielsweise in Ultraschall-Durchflussmessern in der Verfahrenstechnik und/oder im Automobilbereich eingesetzt werden. Insbesondere werden derartige Ultraschallwandler bzw. Ultraschall-Durchflussmesser im Ansaugtrakt und/oder Abgastrakt von Verbrennungsmotoren eingesetzt, insbesondere zur Volumenstrom-oder Massenstrommessung von Luft. Dabei werden typischerweise Ultraschallwandler verwendet, welche sowohl Ultraschallwellen in ein fluides Medium, also ein Gas und/oder eine Flüssigkeit emittieren können als auch Ultraschallwellen empfangen können. Üblicherweise werden Ultraschallsignale durch das strömende fluide Medium von einem Emitter zu einem Empfänger übermittelt und dabei die Laufzeit, Laufzeitdifferenzen oder Phasen bzw. Phasenunterschiede der Ultraschallsignale oder auch Kombinationen dieser Messgrößen gemessen. Diese Signale werden durch die Strömung des fluiden Mediums beeinflusst. Aus dem Grad der Beeinflussung der Laufzeit lässt sich auf die Strömungsgeschwindigkeit des Fluids schließen. Beispiele derartiger Ultraschallwandler, welche auch im Rahmen der vorliegenden Erfindung erfindungsgemäß modifiziert werden können, sind in DE 42 30 773 C1, in EP 0 766 071 A1 oder DE10 2007 010 500 A1 dargestellt.

Ein weiterer Ultraschallwandler ist in US2005/0000279 A1 dargestellt, wobei der Ultraschallwandler dafür ausgebildet ist, extremer Temperatur, hohem Umgebungsdruck und mechanischer Erschütterung zu widerstehen.

In Ultraschallwandlern bzw. Ultraschall-Durchflussmessern, beispielsweise der oben beschriebenen Art, insbesondere zur Ultraschall-Laufzeitmessung und/oder Ultraschall-Strömungsmessung, insbesondere in gasförmigen fluiden Medien, wie beispielsweise Luft, werden typischerweise sogenannte Anpasselemente verwendet, beispielsweise in Form von einer oder mehreren Anpassschichten. Diese Anpasselemente berücksichtigen die Tatsache, dass die von üblichen Ultraschallgebern, beispielsweise Piezokeramiken, erzeugte Schwingungsenergie der Einkopplung in das fluide Medium einen hohen akustischen Impedanzunterschied, beispielsweise um einen Faktor 6 x 10⁻⁵, überwinden muss. Infolgedessen werden in der Regel ca. 99,9995 % der Schallenergie auf dem Weg von einer Piezokeramik in Luft an der entsprechenden Grenzfläche zurückreflektiert und sind für die Messung nicht nutzbar. Derselbe Reflexionsverlust tritt nochmals beim zweiten, empfangenden Wandler auf, welcher auch mit dem ersten Wandler identisch sein kann. Um die akustische Kopplung zwischen dem Piezoelement und dem zu messenden Fluid zu verbessern, werden in der Regel Anpasskörper, beispielsweise mit einer oder mehreren Anpassschichten verwendet, insbesondere um den Signalhub von Ultraschall-Durchflussmessern zu erhöhen. Diese Anpasskörper dienen der Impedanzanpassung und weisen akustische Impedanzen auf, welche zwischen denjenigen des piezoelektrischen Wandlerelements und des fluiden Mediums liegen. Derartige Anpassschichten können beispielsweise als Membranen und λ/4-Schichten umfassen. Bekannt sind beispielsweise Ultraschallwandler mit schallabstrahlenden Resonanz- oder Anpasskörpern, wie beispielsweise Metallmembranen oder einer λ/4-Impedanzanpassschicht. Derartige Ultraschallwandler lassen sich insbesondere zur Strömungsmessung an Luft einsetzen, wobei aus dieser Strömungsmessung beispielsweise ein Luftmengen-Signal innerhalb einer Systemsteuerung eines Verbrennungsmotors abgeleitet werden kann.

Eine Problematik bekannter Ultraschallwandler oder Ultraschall-Strömungsmesser besteht jedoch darin, dass diese besonderen Druckanforderungen genügen müssen. Zu diesem Zweck wird ein druckfestes Ultraschallwandlerdesign benötigt. Beispielsweise werden Ultraschall-Durchflussmesser zur Strömungsmessung in Verbrennungsmotoren und insbesondere im Kraftfahrzeug nach einem Turbolader und/oder Ladeluftkühler eingesetzt. Diese Position bietet Applikationsvorteile und Vorteile bezüglich der Systemsteuerung der Brennkraftmaschine. Bei derartigen Einbaupositionen liegen jedoch die Maximaldrücke, denen die Ultraschallwandler ausgesetzt sind, typischerweise bei 2 bar bis 6 bar. Auch andere Anwendungen sind möglich.

Bei Ultraschallwandlern oder Ultraschall-Strömungsmessern, die derart hohen Anforderungen hinsichtlich der Druckdichtigkeit genügen müssen, wird die schallabstrahlende Fläche meist als integraler Bestandteil des Wandlergehäuses oder des Strömungsrohrs ausgestaltet. Damit ist diese schallabstrahlende Fläche jedoch zumeist hart an diese Bauteile, beispielsweise das Wandlergehäuse und/oder das Strömungsrohr, angebunden, so dass eine hohe Kopplung gegenüber Körperschallausbreitung gegeben ist. Eine derartig schlechte Entkopplung zwischen dem Ultraschallwandler und dem umgebenden Gehäuse bzw. einem umgebenden Strömungsrohr ist jedoch nachteilig für die Signalqualität der Ultraschallwandler. Um dennoch eine gewisse Entkopplung bereitstellen zu können, werden häufig Elastomere, wie beispielsweise Silikon-Formteile und/oder O-Ringe, eingesetzt. Diese jedoch verringern wiederum die Einkoppeleffizienz der Ultraschallsignale in das fluide Medium bzw. die Auskoppeleffizienz von Ultraschallsignalen aus dem fluiden Medium in den Wandler. Es besteht grundsätzlich ein Zielkonflikt zwischen der Anforderung an die Druckfestigkeit und der erforderlichen Körperschallentkopplung, da die zur Bedämpfung der relativ harten Piezokeramiken benötigten Materialien für eine ausreichende Energieankopplung eine hohe akustische Impedanz aufweisen müssen und damit aber gegenüber ebenfalls harten Gehäusematerialien nicht genügend entkoppeln. Zusätzlich eingebrachte Materialien, die für eine Entkopplung geeignet wären, sind aber andererseits zu weich, um den Wandlerkern bei frontal ausgeübtem Druck von der Seite her in einer stabilen Lage zu halten.

### Offenbarung der Erfindung

Es werden dementsprechend ein Ultraschallwandler zum Einsatz in einem fluiden Medium gemäß Anspruch 1 sowie ein Verfahren zur Herstellung eines Ultraschallwandlers zum Einsatz in einem fluiden Medium gemäß Anspruch 11 vorgeschlagen, welche die Nachteile bekannter Ultraschallwandler zumindest weitgehend vermeiden. Unter einem Ultraschallwandler ist dabei allgemein ein Element zu verstehen, welches der Erzeugung und/oder Aufnahme akustischer Energie im Ultraschallbereich dient und welches beispielsweise in Ultraschall-Durchflussmessern der oben beschriebenen Art eingesetzt werden kann, insbesondere in der Kraftfahrzeugtechnik. Der vorgeschlagene Ultraschallwandler weist mindestens ein piezoelektrisches Wandlerelement und mindestens einen Anpasskörper zur Begünstigung einer Schwingungseinkopplung zwischen dem piezoelektrischen Wandlerelement und dem fluiden Medium auf. Der Begriff des piezoelektrischen Wandlerelements ist dabei weit zu fassen und umfasst beispielsweise elektrisch-akustische Wandler, welche nach ferroelektrischen, elektrostatischen, magnetostriktiven, magnetoelektrischen Effekten oder Kombinationen dieser und/oder anderer Effekte arbeiten können. Unter einem Anpasselement wird allgemein ein Element verstanden, welches die akustische Koppelung zwischen dem piezoelektrischen Wandlerelement und dem fluiden Medium, beispielsweise einem Gas, insbesondere Luft, verbessert, indem eine zumindest teilweise Impedanzanpassung erfolgt. Beispielsweise lassen sich Membranen und/oder λ/4-Schichten einsetzen, welche, einzeln oder in Kombination, zwischen dem piezoelektrischen Wandlerelement, beispielsweise einer Kopplungsfläche desselben, und dem fluiden Medium eingebracht werden. Theoretisch sollte für eine gute Ultraschallankopplung die Impedanz des Anpasskörpers, beispielsweise der Anpassschicht, zumindest näherungsweise das geometrische Mittel zwischen den Impedanzen des fluiden Mediums (beispielsweise Luft) und des piezoelektrischen Materials des piezoelektrischen Wandlerelements betragen. Da dies in den meisten Fällen praktisch kaum realisierbar ist, wird als besonders bevorzugter Bereich für die Impedanz des Anpasskörpers bzw. der Anpassschicht ein Bereich zwischen 0,1 x 10⁶ kg/(m²s) und 2,5 x 10⁶ kg/(m²s) vorgeschlagen. Besonders bevorzugt liegt die Impedanz des Anpasskörpers in einem Bereich zwischen 0,5 x 10⁶ kg/(m²s) und 1,6 x 10⁶ kg/(m²s) oder sogar 1,5 x 10⁶ kg/(m²s). Beispielsweise kann bevorzugt ein Wert von 0,8 x 10⁶ kg/(m²s) verwendet werden. Diese bevorzugten Werte gelten für eine einschichtige Anpassschicht und Luft oder andere Gase bei Normaldruck als fluidem Medium. Bei Flüssigkeiten können höhere Impedanzen verwendet werden. Wiederum andere Impedanzen können bei mehrschichtigen Anpassschicht-Aufbauten verwendet werden. Hierbei kann insbesondere versucht werden, die Impedanzen schrittweise von der Impedanz des piezoelektrischen Materials auf die Impedanz des fluiden Mediums anzupassen.

Der Ultraschallwandler umfasst weiterhin ein Gehäuse. Beispielsweise kann dieses Gehäuse ein Metallgehäuse umfassen und/oder ein Kunststoffgehäuse, wobei die Materialauswahl des Gehäuses an die Umgebungsbedingungen angepasst werden kann. Wie unten näher ausgeführt wird, ermöglicht die Erfindung eine weitgehende akustische Entkopplung zwischen Gehäuse und piezoelektrischem Wandlerelement, so dass bei der Materialauswahl des Gehäuses nur ansatzweise Rücksicht auf die Schwingungsentkopplung genommen werden muss. Das piezoelektrische Wandlerelement ist in das Gehäuse eingebracht, beispielsweise in einen Innenraum des Gehäuses. Das Gehäuse weist weiterhin mindestens eine dem fluiden Medium zuweisende Öffnung auf, über welche die Schalleinkopplung in das fluide Medium bzw. aus dem fluiden Medium in das piezoelektrische Wandlerelement erfolgen kann. Beispielsweise kann es sich bei dieser Öffnung um eine runde und/oder polygonale Öffnung handeln, insbesondere eine kreisförmige Öffnung. Der Anpasskörper ist dabei zumindest teilweise in die Öffnung eingebracht. Vorzugsweise erfolgt dieses Einbringen derart, dass ein Zwischenraum zwischen dem Anpasskörper und der Innenwand des Gehäuses im Bereich der Öffnung verbleibt, beispielsweise in Form eines Ringspalts. Dementsprechend kann der Anpasskörper beispielsweise als scheibenförmiger und/oder schichtförmiger Anpasskörper ausgestaltet sein und kann beispielsweise von seiner Außengeometrie her an die Innengeometrie der Öffnung angepasst sein. Insofern ist wiederum eine Ausgestaltung des Anpasskörpers mit einer polygonalen oder runden Außenform bevorzugt. Auf der dem fluiden Medium abgewandten Seite des Anpasskörpers kann dann das mindestens eine piezoelektrische Wandlerelement angeordnet sein.

Der Anpasskörper ist dabei, wie oben dargelegt, vorzugsweise derart in die Öffnung eingebracht, dass dieser keinen unmittelbaren Kontakt mit dem Gehäuse aufweist, so dass eine unmittelbare Schalleinkopplung vom Gehäuse in den Anpasskörper zumindest weitgehend verhindert wird. Um die Schalleinkopplung weiterhin zu vermindern und um gleichzeitig die oben beschriebenen Dichteanforderungen zu erfüllen, beispielsweise eine Druckdichtigkeit des Innenraums des Ultraschallwandlers gegenüber Drücken von bis zu 2 bis 6 bar, ist weiterhin mindestens ein Dichtelement vorgesehen. Dieses Dichtelement, welches als separates Element und somit unabhängig von dem Anpasskörper und dem Gehäuse ausgestaltet sein sollte, ist ausgestaltet, um den oben dargestellten mindestens einen Zwischenraum zwischen dem Anpasskörper und dem Gehäuse abzudichten. Diese Abdichtung erfolgt derart, dass ein Innenraum des Gehäuses zumindest weitgehend gegenüber dem fluiden Medium abgedichtet ist, beispielsweise bis hin zu Drücken von 2 bis 6 bar.

Das Dichtelement kann dabei auf verschiedene Weisen ausgestaltet sein, um die oben beschriebenen Anforderungen der Schallentkopplung zwischen Anpasskörper und Gehäuse und gleichzeitig der Druckdichtigkeit zu erfüllen. Diese Möglichkeiten können dabei auch kombiniert werden. Das Dichtelement weist eine den Anpasskörper und eine die Öffnung umgebende Stirnfläche des Gehäuses, welche ebenfalls dem fluiden Medium zuweisen kann, zumindest teilweise abdeckende Abdichtungsfolie auf. Diese Abdichtungsfolie überdeckt also vorzugsweise vollständig die Frontseite des Ultraschallwandlers, beispielsweise eine ebene Frontseite, welche dem fluiden Medium zuweist. Unter einer Abdichtungsfolie ist dabei ein folienförmiges Element zu verstehen, also ein Element, dessen Dicke erheblich geringer ist als seine lateralen Abmessungen, beispielsweise um mindestens einen Faktor 10, vorzugsweise um mindestens einen Faktor 100, insbesondere mindestens einen Faktor 1000 oder 10000. Diese Abdichtungsfolie weist abdichtende Eigenschaften auf und gewährleistet, beispielsweise allein oder in Kombination mit anderen Bestandteilen des Dichtelements, die oben beschriebene Abdichtung des Innenraums des Gehäuses gegenüber dem fluiden Medium. Diese Abdichtungsfolie weist eine Dicke von weniger als 100 µm, insbesondere von weniger als 25 µm auf.. Die Abdichtungsfolie kann beispielsweise mindestens eine Metallfolie und/oder mindestens eine Kunststofffolie aufweisen. Hierbei können beispielsweise duroplastische Materialien und/oder thermoplastische Materialien eingesetzt werden. Beispielsweise lassen sich Polyimidfolien als duroplastisches Material einsetzen. Duroplastische Materialien sind thermisch und mechanisch besonders stabil. Besonders bevorzugt sind hierbei Kapton^{®}-Folien. Alternativ oder zusätzlich lässt sich als thermoplastisches Material beispielsweise PEEK einsetzen. Thermoplastische Materialien, insbesondere PEEK, weisen in der Regel eine höhere Dichtheit gegenüber Wasserdampf auf. Auch Kombinationen sind möglich, beispielsweise Kombinationen aus einer duroplastischen und einer thermoplastischen Folie.

Zusätzlich zu der mindestens einen Abdichtungsfolie umfasst das Dichtelement mindestens ein zumindest teilweise zwischen dem Gehäuse und dem Anpasskörper eingebrachtes Entkopplungselement. Dieses Entkopplungselement kann beispielsweise den Zwischenraum zwischen dem Anpasskörper und dem Gehäuse vollständig ausfüllen, beispielsweise indem dieses Entkopplungselement den Anpasskörper vollständig lateral umschließt, beispielsweise ringförmig umgibt. Wie oben beschrieben, kann dieser Zwischenraum beispielsweise ein kreisringförmiger Zwischenraum sein und/oder ein Zwischenraum mit einer polygonalen, beispielsweise rechteckigen, Gestalt. Das Entkopplungselement ist eingerichtet, um eine zumindest teilweise Entkopplung von Körperschall zwischen dem Gehäuse und dem Anpasskörper zu gewährleisten. Dementsprechend wird das Material des Entkopplungselements vorzugsweise weicher gewählt als das Material des Gehäuses und/oder des Anpasskörpers.

Auf diese Weise ist eine getrennte Optimierung der Materialeigenschaften des Gehäuses und des Anpasskörpers möglich, wobei durch das Entkopplungselement, welches als vorzugsweise vollständig eigenständiges Element ausgestaltet ist, die Körperschallentkopplung gewährleistet werden kann. Um die Entkopplung zu gewährleisten, kann das Entkopplungselement beispielsweise ein Elastomermaterial aufweisen, insbesondere ein Silikonmaterial und/oder ein Polyurethan. Beispielsweise lässt sich Flüssig-Silikon einsetzen (englisch: liquid silicone rubber, LSR). Das Entkopplungselement weist mindestens ein Kunststoff-material auf, insbesondere ein Elastomermaterial, welches eine Shore-A-Härte von weniger als 40, vorzugsweise von weniger als 25, aufweist. Insbesondere lassen sich dabei auch Verbundmaterialien einsetzen, beispielsweise Verbundmaterialien aus mindestens einem Matrixmaterial, insbesondere einem Elastomer-Matrixmaterial, und mindestens einem Füllstoff. Als Füllstoff kommen dabei beispielsweise Gaseinschlüsse, beispielsweise Gasblasen, in Frage, beispielsweise indem Elastomerschäume eingesetzt werden. Alternativ oder zusätzlich kommen beispielsweise auch feste Einschlüsse in Frage, beispielsweise Kunststoffhohlkugeln als Füllstoff oder als Bestandteil des Füllstoffs, beispielsweise Gas-gefüllte Hohlkugeln. Ein derartiges Entkopplungselement kann die oben beschriebenen Eigenschaften der Entkopplung von Körperschall zwischen dem Gehäuse und dem Anpasskörper hervorragend gewährleisten. Um gleichzeitig eine vollständige Abdichtung zu gewährleisten, kann ein derartiges Entkopplungselement beispielsweise mit der oben beschriebenen Abdichtungsfolie kombiniert werden. So kann der beispielsweise scheibenförmige Anpasskörper ringförmig vollständig von dem Entkopplungselement umschlossen sein, an welches sich dann wiederum nach außen hin das Gehäuse anschließt. Die gesamte Stirnfläche dieser Anordnung, welche dem fluiden Medium zuweist, kann dann beispielsweise von der Abdichtungsfolie abgedeckt sein.

Das Entkopplungselement kann, wie oben dargestellt, den Anpasskörper vollständig oder teilweise umschließen. Besonders bevorzugt ist es, wenn das Entkopplungselement mindestens eine Auskleidung einer Innenfläche des Gehäuses umfasst, beispielsweise eine Auskleidung im Bereich der mindestens einen Öffnung. Alternativ oder zusätzlich ist es besonders bevorzugt, wenn ein verbleibender Hohlraum innerhalb des Gehäuses mit einem Dämpfungselement ausgefüllt ist, beispielsweise mit einem Dämpfungsverguss ausgefüllt ist. Beispielsweise kann ein Hohlraum oberhalb des piezoelektrischen Wandlerelements mit einer Vergussmasse als Dämpfungsverguss vollständig oder teilweise ausgefüllt werden. Hierbei lassen sich beispielsweise wiederum Silikone und/oder Epoxide und/oder Polyurethane einsetzen, welche sich beispielsweise durch Vergießen verarbeiten lassen und welche dämpfende Eigenschaften aufweisen. Insbesondere lassen sich auch hier wieder Verbundmaterialien einsetzen, beispielsweise Verbundmaterialien aus mindestens einem Matrixmaterial, insbesondere einem Elastomer-Matrixmaterial und/oder einem Duroplast-Matrixmaterial, und mindestens einem Füllstoff. Auch thermoplastische Matrixmaterialien sind jedoch grundsätzlich möglich. Als Füllstoff kommen dabei wiederum beispielsweise Gaseinschlüsse, beispielsweise Gasblasen, in Frage, beispielsweise indem Kunststoffschäume eingesetzt werden. Alternativ oder zusätzlich kommen beispielsweise auch feste Einschlüsse in Frage, beispielsweise Kunststoffhohlkugeln als Füllstoff oder als Bestandteil des Füllstoffs, beispielsweise Gas-gefüllte Hohlkugeln. Alternativ oder zusätzlich kommen auch schwerere Füllstoffe in Betracht, beispielsweise Silikate, Keramikpartikel oder Metallpartikel, beispielsweise WolframPartikel. Dabei sollte das Matrixmaterial möglichst weich ausgestaltet sein und ein hohes Verlustmodul aufweisen. Beispielsweise Matrixmaterialien eingesetzt werden, welche eine Shore-A-Härte zwischen 5 und 50 aufweisen. Demgegenüber sollte der Füllstoff möglichst dicht ausgestaltet sein, beispielsweise mit einer Dichte von mehr als 2 g/cm³, vorzugsweise von mehr als 4 g/cm³. Alternativ oder zusätzlich zu einer Ausgestaltung des Dämpfungselements in Form eines Dämpfungsvergusses kann das Dämpfungselement auch auf andere Weise ausgestaltet sein, beispielsweise, wie unten näher beschrieben, durch Verwendung von Formteilen.

Das Gehäuse kann beispielsweise eine Gehäusehülse umfassen, beispielsweise eine zylindrische Gehäusehülse. Insbesondere kann diese Gehäusehülse als Metallhülse ausgestaltet sein, beispielsweise als Biege-Stanz-Teil. Auch Kunststoffe oder andere Materialien oder Verbundmaterialien lassen sich jedoch grundsätzlich einsetzen. Die Gehäusehülse kann die bereits genannte, im fluiden Medium zuweisende Öffnung aufweisen, sowie weiterhin gegebenenfalls mindetens eine zweite Öffnung. Insbesondere kann dies eine Rückseitenöffnung sein, also eine Öffnung, welche der dem fluiden Medium zuweisenden Öffnung gegenberliegt und auf der dem fluiden Medium abgewandten Seite des Ultraschallwandlers angeordnet sein kann. Diese zweite Öffnung kann durch mindestens ein Verschlusselement verschlossen sein. Dabei kann optional mindestens ein elektrischer Anschlusskontakt des piezoelektrischen Wandlerelements durch die zweite Öffnung auf eine Außenseite des Gehäuses geführt ist. Auf diese Weise ist eine Kontaktierung des piezoelektrischen Wandlerelements möglich, um beispielsweise das piezoelektrische Wandlerelement zur Abgabe akustischer Signale anzusteuern und/oder bei der Aufnahme akustischer Signale durch das piezoelektrische Wandlerelement erzeugte elektrische Signale abzufragen.

Das Verschlusselement kann dabei auf verschiedene Weisen ausgestaltet sein, die vorzugsweise ein Herausführen des mindestens einen elektrischen Anschlusskontakts ermöglichen. Beispielsweise kann mindestens ein umbiegbares Wandsegment des Gehäuses vorgesehen sein, welches im umgebogenen Zustand die zweite Öffnung zumindest teilweise verschließt. Beispielsweise kann auf diese Weise mittels eines oder mehrer umbiegbarer Wandsegmente ein Bördelverschluss gewährleistet sein. Das umbiegbare Wandelement kann beispielsweise einstückig mit der Gehäusehülse verbunden sein und/oder ein Teil dieser Gehäusehülse sein. Alternativ oder zusätzlich zur Verwendung umbiegbarer Wandsegmente zum Verschluss der zweiten Öffnung können jedoch auch andere Arten von Verschlusselementen eingesetzt werden, beispielsweise mindestens eine Verschlusskappe. Beispielsweise kann eine Verschlusskappe und/oder ein Verschlussring eingesetzt werden, welche auf die Gehäusehülse aufgesetzt werden kann und beispielsweise über entsprechende Rastelemente, beispielsweise Rastnasen, mit der Gehäusehülse verbunden sein kann. Auch andere Ausgestaltungen sind denkbar. Die Verschlusswirkung muss dabei nicht notwendigerweise vollständig erfolgen, sondern kann beispielsweise auch teilweise erfolgen. So kann beispielsweise durch ein teilweisen Verschließen einerseits eine Abstützwirkung des gesamten Wandlerkerns erfolgen, also eines Elements, welches das piezoelektrische Wandlerelement und ggf. den Anpasskörper, das Dämpfungelement und das Entkopplungselement umfasst. Zusätzlich kann durch das unvollständige Verschließen jedoch beispielsweise eine thermische Ausdehnung des Wandlerkerns zugelassen werden, ohne dass hierdurch das vorderseitige Dichtelement und/oder dessen Befestigung zu stark thermomechanisch belastet wird. Beispielsweise kann eine nach innen weisende Bördelung und/oder eine nach innen weisende Sicke der Gehäusehülse bereits als Verschlusselement die erforderliche Verschluss- und Abstützwirkung gewährleisten, kann jedoch gleichzeitig die geforderte thermische Ausdehnung des Wandlerkerns zulassen. Auch muss die Verschlusswirkung nicht notwendigerweise vollständig an hinteren Ende des Gehäuses erfolgen, sondern kann auch diesem Ende zumindest leicht vorgelagert sein.

Weiterhin kann das Gehäuse des Ultraschallwandlers auf einer Außenseite mindestens ein Schnittstellenelement aufweisen, welches zur mechanischen Verbindung mit einer Messkammer zur Aufnahme des fluiden Mediums dient. Diese Messkammer kann insbesondere ein Strömungsrohr zur Leitung des fluiden Mediums sein. Auf diese Weise kann der Ultraschallwandler beispielsweise unmittelbar in das Strömungsrohr und/oder ein Segment des Strömungsrohrs integriert werden, so dass eine Ultraschallwandler-Sensoranordnung, beispielsweise als Ultraschall-Durchflussmesser oder als Bestandteil eines derartigen Ultraschall-Durchflussmessers, entsteht. Das Schnittstellenelement kann insbesondere einen umlaufenden Rand, vorzugsweise einen Bördelrand, aufweisen, über welchen die Verbindung zur Messkammerwand hergestellt werden kann. Auch andere Ausgestaltungen sind denkbar, beispielsweise in Form von Flanschen, Sicken, Befestigungselementen anderer Art oder ähnlichem.

Neben dem Ultraschallwandler gemäß Anspruch 1 wird weiterhin ein Verfahren zur Herstellung eines Ultraschallwandlers zum Einsatz in einem fluiden Medium gemäß Anspruch 11 vorgeschlagen. Das Verfahren kann insbesondere zur Herstellung eines Ultraschallwandlers gemäß einer oder mehreren der oben beschriebenen Ausführungsformen verwendet werden, so dass bezüglich möglicher Ausführungsformen des Verfahrens auf die obige Beschreibung verwiesen werden kann. Bei dem vorgeschlagenen Verfahren wird mindestens ein piezoelektrisches Wandlerelement in ein Gehäuse eingebracht, welches mindestens eine dem fluiden Medium zuweisende Öffnung aufweist. Mindestens ein Anpasskörper zur Begünstigung einer Schwingungseinkopplung zwischen dem piezoelektrischen Wandlerelement und dem fluiden Medium wird zumindest teilweise in die Öffnung eingebracht. Weiterhin wird mindestens ein Dichtelement mit dem Anpasskörper und dem Gehäuse derart verbunden, dass das Dichtelement mindestens einen Zwischenraum zwischen dem Anpasskörper und dem Gehäuse abdichtet, wobei ein Innenraum des Gehäuses zumindest weitgehend gegenüber dem fluiden Medium abgedichtet wird. Es sei darauf hingewiesen, dass die Verfahrensschritte in der dargestellten Reihenfolge durchgeführt werden können, was jedoch nicht zwingend erforderlich ist. Auch eine andere Reihenfolge als die dargestellte Reihenfolge ist möglich. Weiterhin ist auch die Durchführung zusätzlicher, nichtgenannter Verfahrensschritte möglich. Auch eine zeitlich parallele oder zeitlich überlappende Durchführung einzelner Verfahrensschritte ist denkbar sowie eine wiederholte Durchführung einzelner oder mehrerer Verfahrensschritte.

Das Verfahren kann insbesondere derart durchgeführt werden, dass der Anpasskörper mit dem Gehäuse in einem Verbindungsschritt über das Dichtelement verbunden wird. Insbesondere kann es sich bei diesem Verbindungsschritt um einen einzigen Verbindungsschritt handeln, beispielsweise einen Verbindungsschritt, in welchem gleichzeitig eine stoffschlüssige Verbindung zwischen dem Anpasskörper und dem Dichtelement und dem Gehäuse erfolgt. Insbesondere kann dabei wiederum, wie oben dargestellt, mindestens eine Abdichtungsfolie und/oder mindestens ein Entkopplungselement als Dichtelement verwendet werden. Dabei kann eine Baugruppe gebildet werden, welche mindestens drei miteinander verbundene Einzelteile umfasst. Bei dem vorgeschlagenen Verfahren kann weiterhin mindestens eine Abdichtungsfolie mit einer die Öffnung umgebenden Stirnfläche des Gehäuses und einer Fläche des Anpasskörpers, welche auch als Koppelfläche des Anpasskörpers mit dem fluiden Medium bezeichnet werden kann, verbunden werden. Insbesondere kann diese Verbindung eine stoffschlüssige Verbindung umfassen und/oder eine Pressverbindung, insbesondere ein Pressen unter erhöhter Temperatur. Verschiedene Ausgestaltungen sind möglich.

Der Ultraschallwandler und das Verfahren in einer oder mehreren der oben beschriebenen Ausführungsformen weisen gegenüber bekannten Ultraschallwandlern und bekannten Verfahren eine Mehrzahl von Vorteilen auf. So kann ein druckfester Ultraschallwandler bereitgestellt werden, der über das beschriebene Dichtelement, insbesondere die Abdichtungsfolie und/oder das Entkopplungselement, bei Überdruck des zu messenden fluiden Mediums, beispielsweise Luft, an der Vorderseite die entsprechende Kraft aufnimmt und am Umfang und auf der Rückseite formschlüssig an das Gehäuse weiterleitet. Durch eine vollständig umlaufende, möglichst nicht kompressible Entkopplung, beispielsweise durch das beschriebene Entkopplungselement, ergibt sich eine stabile Konstruktion des Ultraschallwandlers, welche das piezoelektrische Wandlerelement auch bei frontal ausgeübtem Druck von der Seite her in einer stabilen Lage halten kann. Aus Fertigungsgründen kann auch lediglich eine teilumlaufende bzw. weitgehend umlaufende Entkopplung, beispielsweise durch das beschriebene Entkopplungselement, verwendet werden. Allgemein kann das Entkopplungselement ausgestaltet sein, um stets einen Abstand zwischen dem Gehäuse und dem Anpasskörper zu gewährleisten, der der Dämpfung dient.

Weiterhin kann bei der erfindungsgemäßen Ausgestaltung auf eine akustisch ungünstigere, aus härteren Materialien bestehende oder stabil mit dem Gehäuse verbundene Abstrahlfläche verzichtet werden. Eine derartige Abstrahlfläche, welche einstückig mit dem Gehäuse verbunden ist, ist beispielsweise in DE 42 30 773 C1 oder in EP 0 766 071 A1 beschrieben, welche jedoch die oben genannten Nachteile hinsichtlich der Materialauswahl bietet. Diese Nachteile können durch getrennte Optimierung der einzelnen Materialien umgangen werden. Durch eine erfindungsgemäß optionale, rückseitig beispielsweise formschlüssige Kraftweiterleitung, insbesondere über das Gehäuse, kann der Ultraschallwandler dennoch vollständig druckfest ausgestaltet werden. Durch die Erfindung ist weiterhin eine effektive Entkopplung gegenüber Körperschall möglich, für die normalerweise ein relativ weiches Material erforderlich ist. Diese Entkopplung kann nun, wie oben dargestellt, durch das Entkopplungselement übernommen werden, dessen Materialeigenschaften getrennt optimiert werden können. Trotz dieser bevorzugten weichen Aufhängung können der Anpasskörper und das piezoelektrische Wandlerelement auch bei hohen Gegendrücken relativ lagestabil ausgestaltet werden.

Das vorgeschlagene Verfahren ermöglicht eine Verbindung des Anpasskörpers über beispielsweise das Entkopplungselement und/oder die Abdichtungsfolie mit dem Gehäuse in vorzugsweise einem einzigen Verbindungsprozess zu einer Baugruppe, die drei oder mehr Einzelteile aufweist. Anschließend können weitere Elemente eingebracht werden. Beispielsweise kann erst nach der Herstellung der genannten Baugruppe das piezoelektrische Wandlerelement in die Baugruppe eingebracht werden. Auf diese Weise können, durch Vorlagerung der Herstellung der Baugruppe, mechanische und/oder thermische Belastungen, welche weiteren Bauteilen des Ultraschallwandlers Schaden zufügen könnten, von diesen weiteren Bauteilen abgehalten werden.

Kurze Beschreibung der Zeichnungen:
Ausführungsbeispiele der Erfindung sind in den Zeichnungen dargestellt und in der nachfolgenden Beschreibung näher erläutert.

Es zeigen
- Figur 1: ein Ausführungsbeispiel eines erfindungsgemäßen Ultraschallwandlers in Schnittdarstellung;
- Figur 2: ein aufgeschnittenes Gehäuse des Ultraschallwandlers gemäß Figur 1 mit einem Entkopplungselement; und
- Figur 3: der Ultraschallwandler gemäß Figur 1 in perspektivischer Ansicht schräg von oben.

### Ausführungsformen

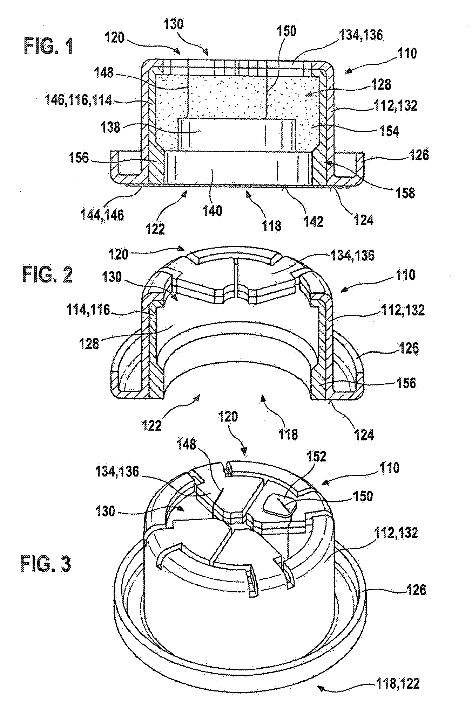

In den Figuren 1 bis 3 ist ein Ausführungsbeispiel eines erfindungsgemäßen Ultraschallwandlers 110 in verschiedenen Darstellungen gezeigt. Dabei zeigt Figur 1 eine Schnittdarstellung von der Seite und Figur 3 eine perspektivische Darstellung des Ultraschallwandlers 110 in Ansicht schräg von oben. Figur 2 zeigt ein Gehäuse 112 des Ultraschallwandlers mit einem Entkopplungselement 114 in Form einer Auskleidung 116. Weitere Elemente des Ultraschallwandlers 110 gemäß Figur 1 sind in Figur 2 zur Vereinfachung nicht dargestellt. Der Ultraschallwandler 110 weist eine Vorderseite 118 auf, welche im Betrieb des Ultraschallwandlers 110 dem fluiden Medium zuweist. Weiterhin weist der Ultraschallwandler 110 eine Rückseite 120 auf, welche im Betrieb in der Regel nicht mit dem fluiden Medium, beispielsweise Luft, in Kontakt stehen wird. Das Gehäuse 112 ist beispielsweise im Wesentlichen topfförmig ausgestaltet und weist auf der Vorderseite 118 eine Öffnung 122 auf, welche insbesondere in Figur 2 erkennbar ist. Diese Öffnung 122 wird von einer Stirnfläche 124 des Gehäuses in diesem Ausführungsbeispiel kreisringförmig umgeben. Weiterhin weist das Gehäuse 112 eine harte Schnittstelle in Form eines Bördelrands 126 auf, welche beispielsweise mit weiteren Teilen einer Sensoranordnung eines Ultraschallsensors verklebt werden kann oder auf andere Weise verbunden werden kann, beispielsweise mit einer Messkammer, insbesondere einem Strömungsrohr zur Leitung des fluiden Mediums.

Das Gehäuse 112 weist einen Innenraum 128 auf. Dieser Innenraum 128 ist zur Vorderseite 118 hin durch die Öffnung 122 begrenzt und zur Rückseite 120 durch eine zweite Öffnung 130. Diese zweite Öffnung 130 ist also in dem dargestellten Ausführungsbeispiel als Rückseitenöffnung einer Gehäusehülse 132 des Gehäuses 112 ausgestaltet und ist durch Verschlusselemente 134 verschlossen. Diese Verschlusselemente 134 sind in dem dargestellten Ausführungsbeispiel durch umgebogene Wandsegmente 136 des Gehäuses 112 gebildet. Das Gehäuse 112 kann dementsprechend beispielsweise als Biege-Stanz-Teil ausgestaltet sein, beispielsweise in Form eines Metallgehäuses. Im dargestellten Ausführungsbeispiel sind vier Wandsegmente 136 vorgesehen, wobei jedoch auch eine andere Ausgestaltung möglich ist. Die Verschlusselemente 134 verschließen die zweite Öffnung 130, wie insbesondere aus Figur 3 erkennbar ist, dabei im dargestellten Ausführungsbeispiel vorzugsweise nicht vollständig.

Im Innenraum 128 des Ultraschallwandlers 110 sind ein piezoelektrisches Wandlerelement 138 sowie ein Anpasskörper 140 aufgenommen, welche beide im dargestellten Ausführungsbeispiel als Kreisringscheiben ausführt sind. Auch andere Ausgestaltungen sind jedoch möglich. Der Anpasskörper 140 ist dabei von seinem Durchmesser her größer dimensioniert als das piezoelektrische Wandlerelement 138 und grenzt unmittelbar an die Auskleidung 116 des Entkopplungselements 114. Der Anpasskörper 140 bzw. eine Koppelfläche 142 dieses Anpasskörpers 140 und die Stirnfläche 124 des Gehäuses 112 sind über eine Abdichtungsfolie 144 miteinander verbunden. Diese Abdichtungsfolie 144, welche in Figur 1 erkennbar ist, bildet in dem dargestellten Ausführungsbeispiel gemeinsam mit dem Entkopplungselement 114 ein Dichtelement 146.

Das piezoelektrische Wandlerelement 138 ist in dem dargestellten Ausführungsbeispiel mittels zweier Anschlusskontakte 148, 150 elektrisch kontaktierbar. Diese Anschlusskontakte 148, 150, welche beispielsweise als Anschlussdrähte ausgestaltet sein können, sind durch den Innenraum 128 hindurch und durch die zweite Öffnung 130 auf die Außenseite des Gehäuses 112 auf der Rückseite 120 geführt. Dort können diese beispielsweise auf isolierten Kontaktflächen 152 fixiert werden, wie insbesondere aus Figur 3 hervorgeht. Dabei ist in Figur 3 lediglich ein Anschlusskontakt 150 auf einer isolierten Kontaktfläche 152 (Kontaktpad) angeordnet, wohingegen der zweite Anschlusskontakt 150 unmittelbar auf dem Gehäuse 112 aufliegt. Anstelle dieser Verbindung eines der Anschlusskontakte 148, 150 mit dem Gehäuse 112 kann jedoch auch bezüglich dieses Anschlusskontakts 148 eine Isolierung erfolgen.

Weiterhin ist in den Innenraum 128, welcher nach Einbringung des Anpasskörpers 140, des piezoelektrischen Wandlerelements 138 und des Entkopplungselements verbleibt, ein Dämpfungselement eingebracht, welches in diesem Ausführungsbeispiel als Dämpfungsverguss 154 ausgestaltet ist. Dieser Dämpfungsverguss 154, welcher als Dämpfung dient, kann dabei auf unterschiedlichste Weise eingebracht werden, wobei der Begriff "Verguss" nicht notwendigerweise auf ein reines Vergießen als Einbringtechnik beschränkt ist. Auch eine andere Art einer Einbringung einer verformbaren Masse als Dämpfungsverguss 154 ist grundsätzlich möglich. Besonders bevorzugt ist jedoch, da dies eine besonders günstige Ausfüllung vorzugsweise sämtlicher verbleibender Hohlräume im Innenraum 128 bedingt, ein Vergießen, beispielsweise mit einem Epoxid, einem Silikon, einem Polyurethan oder ähnlichen Kunststoffen, insbesondere Elastomeren. Das Dämpfungselement, insbesondere der Dämpfungsverguss 154, kann auch ganz oder teilweise mit dem oben beschriebenen Entkopplungselement 114 zusammengefasst werden. In diesem Fall könnte sich beispielsweise das Dämpfungselement bis hin zur Abdichtungsfolie 144 erstrecken.

Zur Herstellung des in den Figuren gezeigten Ultraschallwandlers 110 kann beispielsweise ein zylindrisches Piezoelement als piezoelektrisches Wandlerelement 138 eingesetzt werden. Beispielsweise lässt sich das Material PZT5A einsetzen, also eine Keramik mit relativ geringer mechanischer Güte, hoher Bandbreite und niederer Impedanz sowie großer Auslenkung. Beispielsweise lassen sich Piezoelemente mit einem Durchmesser von 8 mm und einer Höhe von 2 mm verwenden. Aus einem derartigen Durchmesser ergibt sich beispielsweise eine Planarresonanz im Bereich zwischen 200 kHz und 240 kHz, welche für die Anwendung bezüglich unterschiedlicher Anforderungen einen guten Kompromiss darstellen kann. Aus der Höhe kann sich eine gewisse Steifigkeit gegenüber einer Durchbiegung ableiten, wodurch eine ungünstige und temperaturabhängige Modenkopplung vermieden werden kann.

Der Anpasskörper 140 kann beispielsweise aus gepresstem und porös gesinterten Polyimid hergestellt sein. Beispielsweise kann das Polyimid der Marke Vespel^{®} der Firma Dupont verwendet werden, welches eine Dichte von 0,7 g/cm³ aufweist. Beispielsweise kann der Anpasskörper 140 eine Dicke von ca. 1 mm aufweisen. Auch andere Dimensionierungen sind jedoch grundsätzlich möglich, sowie die Wahl anderer Arten von Materialien für den Anpasskörper 140, beispielsweise eines oder mehrerer der in EP 0 766 071 A1, in DE 10 2007 010 500 A1 oder DE 42 30 773 C1 genannten Materialien.

Der Aufbau des Ultraschallwandlers 110 kann beispielsweise mit einer klebstoffbeschichteten Dichtungsfolie 144 beginnen. Beispielsweise kann als Abdichtungsfolie 144 ebenfalls ein Polyimid eingesetzt werden, beispielsweise Kapton^{®}. Beispielsweise kann die Abdichtungsfolie eine Dicke von weniger als 25 µm aufweisen. Beispielsweise kann zunächst eine unstrukturierte Abdichtungsfolie 144 eingesetzt werden, auf welche im Nutzen dann Anpasskörper 140, beispielsweise Anpassschichten, sowie Gehäusehülsen 132, beispielsweise Metallhülsen, aufgesetzt werden können. Die Metallhülsen können beispielsweise als Biege-Stanz-Teile gefertigt sein und können mit einer Auskleidung 116 als Entkopplungselement 114 versehen sein. Beispielsweise kann eine Auskleidung mit Flüssig-Silikon (LSR) erfolgen. Diese LSR-Schicht kann beispielsweise eine Shore-A-Härte von 25 aufweisen und kann der Körperschallentkopplung dienen.

Zur Verbindung der genannten Elemente der Abdichtungsfolie 144, der Gehäusehülse 132 und des Anpasskörpers 140 können beispielsweise eine Presstechnik und/oder eine thermische Technik und/oder andere Techniken verwendet werden. Diese Verbindung kann zusätzlich durch einen Autoklaven-Prozess unterstützt werden. So können beispielsweise in einem Autoklaven-Prozess die Gehäusehülsen 132 und die Anpassungskörper 140 vorzugsweise im Nutzen, unter Temperatureinfluss auf die Abdichtungsfolie 144 gepresst werden. Dieser Autoklaven-Prozess kann beispielsweise ähnlich geführt werden wie eine Herstellung von Faser-Kunststoff-Verbundwerkstoffen. Über die auf der Abdichtungsfolie 144 platzierten Anpassungskörper 140 und Gehäusehülsen 132 kann beispielsweise eine leicht elastische Gegenform gelegt werden. Beispielsweise durch Luftdruck, welcher in Kompressoren erzeugt werden kann, kann diese Gegenform dann gegen die genannten Bauteile gedrückt werden und diese unter Temperatureinfluss auf die Abdichtungsfolie 144 drücken. Die Elastizität der Gegenform kann gewisse Toleranzabweichungen der Bauteile ausgleichen. Durch optional zusätzliche, einseitige Evakuierung kann überschüssige Luft aus dem Verbund entfernt werden. Die Gegenform kann gleichzeitig zur Führung und Positionierung der Bauteile untereinander dienen. Die Gegenform kann auch unten anliegen, dann mit Anpassschichten der Anpasskörper 140 und Gehäusehülsen 132 von oben bestückt werden, und zum Schluss mit der Abdichtungsfolie 144 und beispielsweise einer Andruck-Matte belegt werden. Eine verbesserte Lagetoleranz zwischen den Anpasskörpern 140 und den Gehäusehülsen 132 kann auch durch eine formschlüssige Positionierung von Anpasskörpern 140 und LSR-Schichten der Auskleidung 116 erzielt werden, beispielsweise durch eine in den Figuren 1 und 2 erkennbare innere Verdickung 156 der Auskleidung 116 im Bereich der Öffnung 122. Der Innendurchmesser dieser Verdickung 156 der LSR-Auskleidung 116 kann beispielsweise genau dem Außendurchmesser des Anpasskörpers 140 entsprechen. Die Verdickung 156 füllt einen Zwischenraum 158 zwischen dem Anpasskörper 140 und dem Gehäuse 112 im Bereich der Öffnung 122 vorzugsweise vollständig aus. Der Zwischenraum 158 ist dabei im dargestellten Beispiel (siehe insbesondere Figur 1) vorzugsweise kreisringförmig ausgestaltet. Nach Vereinzelung der einzelnen Baugruppen, welche jeweils eine Gehäusehülse 132, einen Anpasskörper 140 sowie die Abdichtungsfolie 144 umfassen, können dann die piezoelektrischen Wandlerelemente 138 auf die Anpasskörper 140 aufgebracht werden, beispielsweise durch Aufkleben. Die piezoelektrischen Wandlerelemente 138 können entweder mittels der üblichen Elektrodenanordnung an zwei Stirnflächen versehen sein, so dass vor der genannten Verbindung mit dem Anpasskörper zumindest die dem Anpasskörper 140 zugewandte Kontaktierung, beispielsweise einer der Anschlusskontakte 148, 150, bereits aufgebracht sein sollte. In diesem Fall sollte in dem Anpasskörper 140 eine Aussparung vorliegen, welche diese Kontaktierung aufnehmen kann. Alternativ oder zusätzlich kann auch ein piezoelektrisches Wandlerelement 138 eingesetzt werden, welches eine herumgezogene Elektrode aufweist, welche nach der Verbindung mit dem Anpasskörper 140 von der Rückseite her kontaktiert werden kann. In beiden Fällen können die Anschlusskontakte 148, 150, beispielsweise die Kontaktdrähte, nach der Kontaktierung geführt gehalten werden, während die Wandsegmente 138 der Gehäusehülse 132 umgebogen werden. Anschließend können auf der derart entstandenen Rückwand der Gehäusehülse 132 die Anschlusskontakte 148, 150 abgelegt werden und darauf gegebenenfalls kontaktiert werden. Die Gehäusehülse 132 selbst kann beispielsweise als metallische Hülse ausgestaltet sein und kann als EMV-Abschirmung (elektromagnetische Abschirmung) mit einem der Anschlusskontakte 148, 150 (in Figur 3 der Anschlusskontakt 148) verbunden werden. Zuletzt kann der Innenraum 128 mit einem Dämpfungselement in Form des Dämpfungsvergusses 154 ausgegossen werden. Dieser Dämpfungsverguss 154 kann insbesondere deutlich härter ausgestaltet sein als das Entkopplungselement 114, insbesondere die Auskleidung 116. Auf diese Weise kann der Dämpfungsverguss 154 eine ausreichende Menge an Schallenergie vom piezoelektrischen Wandlerelement 138 aufnehmen. Die Aushärtung einer optionalen Klebung zwischen dem piezoelektrischen Wandlerelement 138 und dem Anpasskörper 140 kann optional gleichzeitig mit einer Aushärtung des Dämpfungsvergusses 154 erfolgen.

Verschiedene Abwandlungen des oben beschriebenen Aufbaus sind möglich. So kann die Kontaktierung des piezoelektrischen Wandlerelements 138 auch beispielsweise nur durch einen einzelnen Draht und/oder über ein metallisches Formteil gebildet sein, wobei beispielsweise eine andere Elektrode des piezoelektrischen Wandlerelements 138 bereits innerhalb der Gehäusehülse 132, beispielsweise der Metallhülse, mit dieser leitend verbunden werden kann. Der Dämpfungsverguss 154 kann, alternativ oder zusätzlich zu einem Vergießen, wie oben beschrieben, auch als Formteil eingebracht werden, was im Rahmen der vorliegenden Erfindung noch unter dem Begriff "Dämpfungsverguss" verstanden werden soll. Ein derartiges Formteil kann beispielsweise durch Verschluss der Verschlusselemente 134 bzw. Wandsegmente 136 gegen das piezoelektrische Wandlerelement 138 gedrückt werden, so dass dieses bedämpft wird und/oder mindestens eine der beiden Kontaktierungen während des Herstellungsprozesses fixieren und/oder andrücken. Die Kontaktierung des piezoelektrischen Wandlerelements 138, beispielsweise die Verbindung mit den Anschlusskontakten 148, 150, kann weiterhin, alternativ oder zusätzlich, auch über eine Leitklebung, ein Löten, ein Drahtbonden, ein Thermokompressionsschweißen oder eine Kombination der genannten und/oder anderer Techniken erfolgen.

Weiterhin ist auch ein Design denkbar, in welchem eine zylindrische Gehäusehülse 132 mit einem Entkopplungs- und Dämpfungsmaterial als Teil des Entkopplungselements 114 im Wesentlichen am Umfang ausgekleidet wird, in die dann der Anpasskörper 140, beispielsweise eine Anpassschicht, und/oder das piezoelektrische Wandlerelement 138 eingesenkt werden können und/oder die dann über den Anpasskörper 140 und/oder das piezoelektrische Wandlerelement 138 übergestülpt werden kann, wobei zusätzlich eine Abdichtung mit einer Beschichtung und/oder Folie erfolgen kann.

Vorteilhaft für eine gute Druckfestigkeit ist es, wenn die Gehäusehülse 132 auf der Rückseite 120, wenn überhaupt, möglichst kleine Aussparungen aufweist. Optimal wäre ein vollständiger Verschluss durch die Verschlusselemente 134, da dann das Entkopplungselement 114, beispielsweise die Auskleidung 116, prinzipiell sehr weich ausgestaltet sein kann. Falls die Entkopplungsmasse des Entkopplungselements 114 nicht kompressibel ist, führt ein gleichmäßig über die Abstrahlfläche auf der Vorderseite 118 des Ultraschallwandlers 110 einwirkender Druck des fluiden Mediums nicht zu einer Lageänderung des Wandlerkerns, insbesondere des piezoelektrischen Wandlers 138. Weiterhin ist es vorteilhaft, dass die Entkopplung über das Entkopplungselement 114, insbesondere über die Auskleidung 116, entlang der Rückseite 120 des Gehäuses 112 umläuft. Dies ist in den Figuren 1 und 2 erkennbar, da sich dort die Auskleidung 116 auch über die Wandsegmente 136 erstreckt. Dies bedingt, dass für eine optimale Druckfestigkeit der Dämpfungsverguss 154 nicht unmittelbar an die Rückwand des Gehäuses 112 angrenzen muss, in welchem Fall Körperschall aufgrund der größeren Härte des Dämpfungsvergusses 154 von diesem an das Gehäuse 112 übertragen würde, was wiederum zu Störsignalen bei einem in der Nähe montierten zweiten Ultraschallwandler 110 führen könnte.

Alternativ zu der in den Figuren 1 bis 3 dargestellten Umbiegung der Wandsegmente 136 der Gehäusehülse 132 kann die Rückwand des Gehäuses 112 auch durch ein separates Bauteil, beispielsweise in Kappenform, gebildet werden. Dieses separate Bauteil kann über Fixierelemente, beispielsweise Rastnasen, fixiert werden. In diesem Fall kann die Kappe beispielsweise vorher ebenfalls mit Entkopplungsmaterial bzw. einer Auskleidung 116 ausgekleidet werden, oder es kann Entkopplungsmaterial rückseitig auf das Dämpfungselement bzw. den Dämpfungsverguss 154 aufgebracht werden, bevor die Kappe darauf aufgesetzt wird. Prinzipiell kann, in dieser oder in anderen Ausgestaltungen der Erfindung, das Einbringen des Dämpfungsvergusses 154 und der Verschluss der Rückwand des Gehäuses 112, sei es durch Umbiegen, durch ein separates Bauteil oder ähnliche Verschlussmaßnahmen, auch umgekehrt werden.

Die Gehäusehülse 132 kann, wie oben dargestellt, insbesondere aus einem metallischen Werkstoff gefertigt werden. Alternativ oder zusätzlich kann das Gehäuse 132 jedoch auch ganz oder teilweise aus einem Kunststoff hergestellt sein. Besonders vorteilhaft ist die in der Ausführungsform gemäß den Figuren 1 bis 3 dargestellte Schnittstelle in Form des Bördelrands 126. Auch andere Ausgestaltungen harter Schnittstellen sind denkbar. Im Gegensatz zu vielen handelsüblichen Ultraschallwandlern liegt die Entkopplung als Schnittstelle somit außen am Gehäuse 112, wodurch verhindert wird, dass diese durch Aufbaumaßnahmen am Ultraschallwandler 110 selbst mit abgedichtet wird.

Der Anpasskörper 120 kann auf verschiedene Weisen ausgestaltet werden. Beispielsweise kann dieser Anpasskörper 140 als Anpassschicht ausgestaltet sein und/oder eine Anpassschicht umfassen. Der Anpasskörper kann beispielsweise ein thermisch, chemisch oder photochemisch aushärtbares oder vernetzbares Polymermaterial umfassen. Dieses Polymermaterial kann beispielsweise ein syntaktisches Material, ein duroplastisches Material, insbesondere ein Epoxidharz, ein Polyester, ein Phenolharz oder ein Cyanatester, einen Thermoplasten, ein Elastomer, insbesondere Silikon, einen Polymerblend, ein Polyimid, insbesondere Kapton^{®}, oder eine Mischung der genannten und/oder anderer Materialien umfassen. Daneben kann das Polymermaterial weiterhin, insbesondere zum Zweck der Reduktion der Dichte, mindestens einen Füllstoff umfassen, insbesondere mindestens einen der folgenden Füllstoffe: Hohlräume (z. B. durch Schäumen erzeugte Hohlräume), Fasern, Glashohlkugeln, Kunststoffhohlkugeln, einen flüchtigen Füllstoff (insbesondere einen während oder nach einem Vernetzen des Polymers entweichenden oder entfernbaren Füllstoff) oder Kombinationen der genannten und/oder anderer Füllstoffmaterialien. Alternativ oder zusätzlich kann der Anpasskörper 140 auch eine Epoxidharz-Glashohlkugel-Mischung umfassen. Wiederum alternativ oder zusätzlich kann, wie oben dargestellt, der Anpasskörper 140 auch porös gesintertes Polyimid, insbesondere das genannte Vespel^{®}, umfassen. Der Anpasskörper, insbesondere die Vespel^{®}-Anpassschicht, kann vor einer Weiterverarbeitung auch mit einer Beschichtung versehen werden, beispielsweise einer Parylene-Beschichtung. Eine derartige Beschichtung kann beispielsweise ausgestaltet sein, um Poren an der Oberfläche des Anpasskörpers 140 so zu verschließen, dass ein Versickern von Klebstoff in nachfolgenden Prozessschritten unterdrückt werden kann.

Der Ultraschallwandler 110 kann, außer dem Anpasskörper 140 und der Abdichtungsfolie 144, gegebenenfalls noch weitere Schichten umfassen, beispielsweise zusätzliche Anpassschichten und/oder Ausgleichsschichten und/oder Stabilisierungselemente, welche beispielsweise eine thermische und/oder mechanische und/oder akustische Anpasswirkung aufweisen können. Diese weiteren Schichten können beispielsweise zwischen dem piezoelektrischen Wandlerelement 138 und dem, gegebenenfalls beschichteten, Anpasskörper 140 und/oder zwischen dem Anpasskörper 140 und der Abdichtungsfolie 144 aufgenommen sein.

Falls der Ultraschallwandler 110 metallische Materialien umfasst, beispielsweise in Form eines metallischen Gehäuses 112, so können diese durch die Abdichtungsfolie 144 auch gegenüber dem fluiden Medium auf der Vorderseite 118 elektrisch isoliert werden. Zu diesem Zweck kann es vorteilhaft sein, wenn die Abdichtungsfolie 144 ganz oder teilweise aus einem elektrisch isolierenden Material hergestellt ist. Elektrisch leitfähige Bestandteile des Gehäuses 112 und/oder eine elektrisch leitfähige Folie oder Schicht können jedoch gleichzeitig auch als EMV-Maßnahme, insbesondere als Abschirmung, dienen.

## Patentansprüche

1. Ultraschallwandler (110) zum Einsatz in einem fluiden Medium, umfassend mindestens ein piezoelektrisches Wandlerelement (138) und mindestens einen Anpasskörper (140) zur Begünstigung einer Schwingungseinkopplung zwischen dem piezoelektrischen Wandlerelement (138) und dem fluiden Medium, weiterhin umfassend ein Gehäuse (112), wobei das piezoelektrische Wandlerelement (138) in das Gehäuse (112) eingebracht ist, wobei das Gehäuse (112) mindestens eine dem fluiden Medium zuweisende Öffnung (122) aufweist, wobei der Anpasskörper (140) zumindest teilweise in die Öffnung (122) eingebracht ist, wobei der Ultraschallwandler (110) weiterhin mindestens ein Dichtelement (146) aufweist, wobei das Dichtelement (146) mindestens einen Zwischenraum (158) zwischen dem Anpasskörper (140) und dem Gehäuse (112) derart abdichtet, dass ein Innenraum (128) des Gehäuses (112) zumindest weitgehend gegenüber dem fluiden Medium abgedichtet ist, wobei das Dichtelement (146) eine den Anpasskörper (140) und eine die Öffnung (122) umgebende Stirnfläche (124) des Gehäuses (112) zumindest teilweise abdeckende Abdichtungsfolie (144) aufweist, wobei das Dichtelement (146) mindestens ein zumindest teilweise zwischen dem Gehäuse (112) und dem Anpasskärper (140) eingebrachtes Entkopplungselement (114) umfasst, wobei das Entkopplungselement (114) eingerichtet ist, um eine zumindest teilweise Entkopplung von Körperschall zwischen dem Gehäuse (112) und dem Anpasskörper (140) zu gewährleisten,
**dadurch gekennzeichnet, dass**
die Abdichtungsfolie (144) eine Dicke von weniger als 100 µm aufweist, wobei das Entkopplungselement (114) mindestens ein Kunststoffmaterial mit einer Shore-A-Härte von weniger als 40, vorzugsweise von weniger als 25, aufweist.

2. Ultraschallwandler (110) nach dem vorhergehenden Anspruch, wobei die Abdichtungsfolie (144) eine Dicke von weniger als 25 µm aufweist

3. Ultraschallwandler (110) nach dem vorhergehenden Anspruch, wobei die Abdichtungsfolie (144) mindestens eine Metallfolie und/oder mindestens eine Kunststofffolie aufweist.

4. Ultraschallwandler (110) nach einem, der vorhergehenden Ansprüche, wobei das Entkopplungselement (114) ein Elastomermaterial Aufweist, insbesondere ein Polyurethan und/oder ein Silikonmaterial, insbesondere ein Flüssig-Silikon.

5. Ultraschallwandler (110) nach einem der vorhergehenden Ansprüche, wobei das Kunststoffmaterial ein Elastomermaterial ist.

6. Ultraschallwandler (110) nach einem der vorhergehenden Ansprüche, wobei das Entkopplungselement (114) mindestens eine Auskleidung (116) einer Innenfläche des Gehäuses (112) umfasst.

7. Ultraschallwandler (110) nach einem der vorhergehenden Ansprüche, wobei ein verbleibender Hohlraum innerhalb des Gehäuses (112) mit einem Dämpfungselement, insbesondere einem Dämpfungsverguss (154), ausgefüllt ist.

8. Ultraschallwandler (110) nach einem der vorhergehenden Ansprüche, wobei das Gehäuse (112) eine Gehäusehülse (132), insbesondere eine Metallhülse, mit der dem fluiden Medium zuweisende Öffnung (122) sowie mindestens einer zweiten Öffnung (130), insbesondere einer Rückseitenöffnung, aufweist, wobei die zweite Öffnung (130) durch mindestens ein Verschlusselement (134) verschlossen ist, wobei mindestens ein elektrischer Anschlusskontaki (148, 150) des piezoelektrischen Wandlerelements (938) durch die zweite Öffnung (130) auf eine Außenseite des Gehäuses (112) geführt ist.

9. Ultraschallwandler (110) nach dem vorhergehenden Anspruch, wobei das Verschlusselement (134) mindestens ein umbiegbares Wandsegment (136) des Gehäuses (112), insbesondere der Gehäusehülse (132), und/oder mindestens eine Verschlusskappe aufweist.

10. Ultraschallwandler (110) nach einem der vorhergehenden Ansprüche, wobei das Gehäuse (112) auf einer Außenseite mindestens ein Schnlitslellenelement, insbesondere einen umlaufenden Rand, vorzugsweise einen Bördelrand (126), zur Verbindung mit einer Messkammer, insbesondere einem Strömungsrohr zur Leitung des fluiden Mediums, aufweist.

11. Verfahren zur Herstellung eines Ultraschallwandlers (110) zum Einsatz in einem fluiden Medium, insbesondere eines Ultraschallwandlers (10) nach einem der vorhergehenden Ansprüche, wobei mindestens ein piezoelektrisches Wandlerelement (138) in ein Gehäuse (112) eingebracht wird, wobei das Gehäuse (112) mindestens eine dem fluiden Medium zuweisende Öffnung (122) aufweist, wobei mindestens ein Anpasskörper (140) zur Begünstigung einer Schwingungseinkopplung zwischen dem piezoelektrischen Wandlerelement (138) und dem fluiden Medium zumindest teilweise in die Öffnung (122) eingebracht wird, wobei weiterhin mindestens ein Dichtelement (146) mit dem Anpasskörper (140) und dem Gehäuse (112) derart verbunden wird, dass das Dichtelement (146) mindestens einen Zwischenraum (158) zwischen dem Anpasskörper (140) und dem Gehäuse (112) abdichtet, wobei ein Innenraum (128) des Gehäuses (112) zumindest weitgehend gegenüber dem fluiden Medium abgedichtet wird, wobei das Dichtelement (146) eine den Anpasskörper (140) und eine die Öffnung (122) umgebende Stirnfläche (124) des Gehäuses (112) zumindest teilweise abdeckende Abdichtungsfolie (144) aufweist, wobei das Dichtelement (146) mindestens ein zumindest teilweise zwischen dem Gehäuse (112) und dem Anpasskörper (140) eingebrachtes Entkopplungselement (114) umfasst, wobei das Entkopplungselement (114) eingerichtet ist, um eine zumindest teilweise Entkopplung von Körperschall zwischen dem Gehäuse (112) und dem Anpasskörper (140) zu gewährleisten,
**dadurch gekennzeichnet, dass**
die Abdichtungsfolie (144) eine Dicke von weniger als 100 µm aufweist, wobei das Entkopplungselement (114) mindestens ein Kunststoffmaterial mit einer Shore-A-Härte von weniger als 40, vorzugsweise von weniger als 25, aufweist.

12. Verfahren nach dem vorhergehenden Anspruch, wobei der Anpasskörper (140) mit dem Gehäuse (112) in einem Verbindungsschritt, vorzugsweise einem einzigen Verbindungsschritt, über das Dichtelement (146), insbesondere die mindestens eine Abdichtungsfolie (144) und/oder das Entkopplungselement (114), mit dem Gehäuse (112) verbunden wird, wobei eine Baugruppe gebildet wird, welche mindestens drei miteinander verbundene Einzelteile (112, 140, 144, 114) umfasst.

13. Verfahren nach einem der beiden vorhergehenden Ansprüche, wobei die mindestens eine Abdichtungsfolie (144) mit der die Öffnung (122) umgebenden Stirnfläche (124) des Gehäuses (112) und einer Fläche des Anpasskörpers (140) verbunden wird, insbesondere durch eine stoffschlüssige Verbindung und/oder durch Pressen, insbesondere unter erhöhter Temperatur.

## Claims

1. Ultrasonic transducer (110) for use in a fluid medium, comprising at least one piezoelectric transducer element (138) and at least one adaptive body (140) for promoting coupling-in of vibration between the piezoelectric transducer element (138) and the fluid medium, furthermore comprising a housing (112), wherein the piezoelectric transducer element (138) is placed into the housing (112), wherein the housing (112) has at least one opening (122) facing the fluid medium, wherein the adaptive body (140) is at least partially placed into the opening (122), wherein the ultrasonic transducer (110) furthermore has at least one sealing element (146), wherein the sealing element (146) seals off at least one intermediate space (158) between the adaptive body (140) and the housing (112) in such a manner that an interior space (128) of the housing (112) is at least substantially sealed off from the fluid medium, wherein the sealing element (146) has a sealing film (144) at least partially covering the adaptive body (140) and an end surface (124) of the housing (112), which end surface surrounds the opening (122), wherein the sealing element (146) comprises at least one decoupling element (114) at least partially placed between the housing (112) and the adaptive body (140), wherein the decoupling element (114) is designed in order to ensure an at least partial decoupling of structure-borne noise between the housing (112) and the adaptive body (140), **characterized in that** the sealing film (144) has a thickness of less than 100 µm, wherein the decoupling element (114) has at least one plastics material with a Shore-A hardness of less than 40, preferably of less than 25.

2. Ultrasonic transducer (110) according to the preceding claim, wherein the sealing film (144) has a thickness of less than 25 µm.

3. Ultrasonic transducer (110) according to the preceding claim, wherein the sealing film (144) comprises at least one metal foil and/or at least one plastics film.

4. Ultrasonic transducer (110) according to one of the preceding claims, wherein the decoupling element (114) comprises an elastomer material, in particular a polyurethane and/or a silicone material, in particular liquid silicone rubber.

5. Ultrasonic transducer (110) according to one of the preceding claims, wherein the plastics material is an elastomer material.

6. Ultrasonic transducer (110) according to one of the preceding claims, wherein the decoupling element (114) comprises at least one lining (116) of an inner surface of the housing (112).

7. Ultrasonic transducer (110) according to one of the preceding claims, wherein a remaining cavity within the housing (112) is filled with a damping element, in particular a damping seal (154).

8. Ultrasonic transducer (110) according to one of the preceding claims, wherein the housing (112) has a housing sleeve (132), in particular a metal sleeve, with the opening (122) facing the fluid medium and with at least one second opening (130), in particular a rear side opening, wherein the second opening (130) is closed by at least one closure element (134), wherein at least one electric connecting contact (148, 150) of the piezoelectric transducer element (138) is guided through the second opening (130) onto an outer side of the housing (112).

9. Ultrasonic transducer (110) according to the preceding claim, wherein the closure element (134) has at least one wall segment (136), which can bend over, of the housing (112), in particular of the housing sleeve (132), and/or at least one closure cap.

10. Ultrasonic transducer (110) according to one of the preceding claims, wherein an outer side of the housing (112) has at least one interface element, in particular an encircling edge, preferably a crimped edge (126), for connection to a measuring chamber, in particular to a flow pipe for conducting the fluid medium.

11. Method for producing an ultrasonic transducer (110) for use in a fluid medium, in particular an ultrasonic transducer (110) according to one of the preceding claims, wherein at least one piezoelectric transducer element (138) is placed into a housing (112), wherein the housing (112) has at least one opening (122) facing the fluid medium, wherein at least one adaptive body (140) for promoting coupling-in of vibration between the piezoelectric transducer element (138) and the fluid medium is at least partially placed into the opening (122), wherein, furthermore, at least one sealing element (146) is connected to the adaptive body (140) and to the housing (112) in such a manner that the sealing element (146) seals off at least one intermediate space (158) between the adaptive body (140) and the housing (112), wherein an interior space (128) of the housing (112) is at least substantially sealed off from the fluid medium, wherein the sealing element (146) has a sealing film (144) at least partially covering the adaptive body (140) and an end surface (124) of the housing (112), which end surface surrounds the opening (122), wherein the sealing element (146) comprises at least one decoupling element (114) at least partially placed between the housing (112) and the adaptive body (140), wherein the decoupling element (114) is designed to ensure an at least partial decoupling of structure-borne noise between the housing (112) and the adaptive body (140), **characterized in that** the sealing film (144) has a thickness of less than 100 µm, wherein the decoupling element (114) has at least one plastics material with a Shore-A hardness of less than 40, preferably of less than 25.

12. Method according to the preceding claim, wherein the adaptive body (140) is connected to the housing (112) in a connecting step, preferably a single connecting step, via the sealing element (146), in particular the at least one sealing film (144) and/or the decoupling element (114), wherein a subassembly comprising at least three interconnected individual parts (112, 140, 144, 114) is formed.

13. Method according to one of the two preceding claims, wherein the at least one sealing film (144) is connected to that end surface (124) of the housing (112) which surrounds the opening (122) and to a surface of the adaptive body (140), in particular by an integrally bonded connection and/or by pressing, in particular under elevated temperature.

## Revendications

1. Convertisseur d'ultrasons (110) destiné à être utilisé dans un milieu fluide, le convertisseur comportant
au moins un élément piézoélectrique de convertisseur (138) et au moins un corps d'adaptation (140) destiné à favoriser l'injection des vibrations entre l'élément piézoélectrique de conversion (138) et le milieu fluide et en outre
un boîtier (112),
l'élément piézoélectrique de conversion (138) étant placé dans le boîtier (112),
le boîtier (112) présentant au moins une ouverture (122) orientée vers le milieu fluide,
le corps d'adaptation (140) étant placé au moins en partie dans l'ouverture (122),
le convertisseur d'ultrasons (110) présentant en outre au moins un élément d'étanchéité (146),
l'élément d'étanchéité (146) assurant l'étanchéité d'au moins un espace intermédiaire (158) situé entre le corps d'adaptation (140) et le boîtier (112), de telle sorte que l'espace intérieur (128) du boîtier (112) soit séparé du milieu fluide de manière au moins largement étanche,
l'élément d'étanchéité (146) présentant un film d'étanchéité (144) qui recouvre au moins en partie le corps d'adaptation et une surface frontale (124) du boîtier (112) qui entoure l'ouverture (122),
l'élément d'étanchéité (146) comportant au moins un élément de découplage (114) placé au moins en partie entre le boîtier (112) et le corps d'adaptation (140),
l'élément de découplage (114) étant conçu pour assurer un découplage au moins partiel des vibrations mécaniques entre le boîtier (112) et le corps d'adaptation (140),
**caractérisé en ce que**
la feuille d'étanchéité (144) présente une épaisseur inférieure à 100 µm et
**en ce que** l'élément de découplage (114) présente une matière synthétique dont la dureté Shore-A est inférieure à 40 et de préférence inférieure à 25.

2. Convertisseur d'ultrasons (110) selon la revendication précédente, dans lequel la feuille d'étanchéité (144) présente une épaisseur inférieure à 25 µm.

3. Convertisseur d'ultrasons (110) selon la revendication précédente, dans lequel la feuille d'étanchéité (144) présente au moins une feuille métallique et/ou au moins une feuille en matière synthétique.

4. Convertisseur d'ultrasons (110) selon l'une des revendications précédentes, dans lequel l'élément de découplage (114) présente un matériau élastomère, en particulier un polyuréthane et/ou un matériau à base de silicone et en particulier un silicone liquide.

5. Convertisseur d'ultrasons (110) selon l'une des revendications précédentes, dans lequel la matière synthétique est un matériau élastomère.

6. Convertisseur d'ultrasons (110) selon l'une des revendications précédentes, dans lequel l'élément de découplage (114) comporte au moins un habillage (116) de la surface intérieure du boîtier (112).

7. Convertisseur d'ultrasons (110) selon l'une des revendications précédentes, dans lequel l'espace vide qui reste à l'intérieur du boîtier (112) est rempli d'un élément d'amortissement, en particulier d'une pâte d'amortissement (154).

8. Convertisseur d'ultrasons (110) selon l'une des revendications précédentes, dans lequel le boîtier (112) présente une douille de boîtier (132), en particulier une douille métallique, qui présente l'ouverture (122) tournée vers le milieu fluide, ainsi qu'au moins une deuxième ouverture (130), en particulier une ouverture du côté arrière, la deuxième ouverture (130) étant fermée par au moins un élément de fermeture (134), au moins un contact électrique de raccordement (148, 150) de l'élément piézoélectrique de conversion (138) traversant la deuxième ouverture (130) sur le côté extérieur du boîtier (112).

9. Convertisseur d'ultrasons (110) selon l'une des revendications précédentes, dans lequel l'élément de fermeture (134) présente au moins un segment flexible de paroi (136) du boîtier (112), en particulier de la douille de boîtier (132), et/ou au moins un capuchon de fermeture.

10. Convertisseur d'ultrasons (110) selon l'une des revendications précédentes, dans lequel le boîtier (112) présente sur un côté extérieur au moins un élément d'interface, en particulier un bord périphérique, de préférence un bord rabattu (126), qui assure la liaison avec une chambre de mesure, en particulier un tube d'écoulement qui conduit le milieu fluide.

11. Procédé de fabrication d'un convertisseur à ultrasons (110) destiné à être utilisé dans un milieu fluide, en particulier d'un convertisseur d'ultrasons (110) selon l'une des revendications précédentes, dans lequel
au moins un élément piézoélectrique de conversion (138) est placé dans un boîtier (112),
le boîtier (112) présentant au moins une ouverture (122) tournée vers le milieu fluide,
au moins un corps d'adaptation (140) qui favorise l'injection des vibrations entre l'élément piézoélectrique de conversion (138) et le milieu fluide étant placé au moins en partie dans l'ouverture (122),
au moins un élément d'étanchéité (146) étant en outre relié au corps d'adaptation (140) et au boîtier (112) de telle sorte que l'élément d'étanchéité (146) assure l'étanchéité d'au moins un espace intermédiaire (158) situé entre le corps d'adaptation (140) et le boîtier (112),
un espace intérieur (128) du boîtier (112) étant séparé de manière au moins largement étanche du milieu fluide,
l'élément d'étanchéité (146) présentant une feuille d'étanchéité (144) qui recouvre au moins partiellement le corps d'adaptation (140) et une surface frontale (124) du boîtier (112) qui entoure l'ouverture (122),
l'élément d'étanchéité (146) comportant au moins un élément de découplage (114) placé au moins en partie entre le boîtier (112) et le corps d'adaptation (140),
l'élément de découplage (114) étant conçu pour garantir un découplage au moins partiel des vibrations mécaniques entre le boîtier (112) et le corps d'adaptation (140),
**caractérisé en ce que**
la feuille d'étanchéité (144) présente une épaisseur inférieure à 100 µm et
**en ce que** l'élément de découplage (114) présente une matière synthétique dont la dureté Shore-A est inférieure à 40 et de préférence inférieure à 25.

12. Procédé selon la revendication précédente, dans lequel le corps d'adaptation (140) est relié au boîtier (112) dans une étape de liaison, de préférence une seule étape de liaison, par l'intermédiaire de l'élément d'étanchéité (146), en particulier de la ou des feuilles d'étanchéité (144) et/ou de l'élément de découplage (114), de manière former un module qui comporte au moins trois parties distinctes (112, 140, 144, 114) reliées les unes aux autres.

13. Procédé selon l'une des deux revendications qui précèdent, dans lequel la ou les feuilles d'étanchéité (144) sont reliées à la surface frontale (124) du boîtier (112) qui entoure l'ouverture (122) et à une surface du corps d'adaptation (140) en particulier par une liaison en correspondance de matière et/ou par pressage, en particulier à haute température.
